# EUROPEAN PATENT SPECIFICATION

(11) **EP 2 208 902 B1**
(45) Date of publication and mention of the grant of the patent: **25.09.2013**
(21) Application number: 10150830.7
(22) Date of filing: 15.01.2010
(51) Int. Cl.: F16C 35/063, F16C 35/12, F16D 1/08, F16D 1/04

(54) **A supporting structure of ball screw shaft**
Tragestruktur eines Kugelumlaufspindelschafts
Structure de support de tige d' arbre fileté à billes

(30) Priority: 20.01.2009 JP 2009009518
(43) Date of publication of application: 21.07.2010
(73) Proprietor: NTN Corporation, Osaka (JP)
(72) Inventor: Tateishi, Kouji, Iwata-shi Shizuoka (JP); Kazuno, Keisuke, Iwata-shi Shizuoka (JP)
(74) Representative: Cohausz & Florack

(56) References cited:
- EP-A1- 1 808 618
- US-A1- 2008 295 625

## Description

### Field of the Invention

The present invention relates to a supporting structure of a ball screw shaft in a ball screw used for various kinds of machine tools such as an electric discharge machine and a tapping center etc. or actuators in automobiles.

### Description of Background Art

The ball screw used in actuators in machine tools or automobiles are used for converting rotation of an electric motor to linear motion and its both ends are rotationally supported by rolling bearings such as deep groove ball bearings. In general, an inner ring of the rolling bearing to which an axial load of the screw shaft is applied is axially secured by a snap ring which is cheap and easy in assembly.

However when using the snap ring, since an axial play is necessarily generated due to dimensional variations between its ring groove and the inner ring of the bearing, the snap ring can be slipped off or broken when a shocking load is applied thereto and thus problems in the reliability or durability of the ball screw can occur.

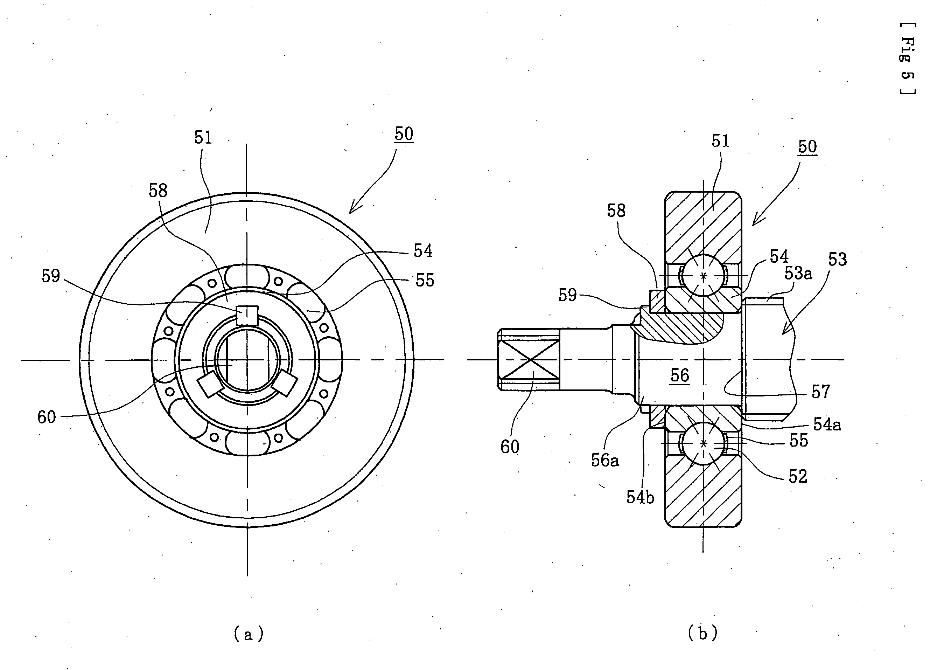

It has been known one example of a supporting structure of the ball screw shaft for solving such a problem as shown in Fig. 5. In this example a supporting bearing 50 of a driving motor side is a four-point contact ball bearing comprising an outer ring 51 adapted to be fitted into a housing (not shown), an inner ring 54 fitted within the outer ring 51 via a plurality of balls 52 and fitted onto a screw shaft 53, and a cage 55 for rollably holding the balls 52.

Formed on a fitting portion 56 on the end of the screw shaft 53 is a shoulder portion 57 against which one end face of the inner ring 54 abuts. The circumference of the end face of the shoulder 57 of the screw shaft 53 is separated to tops and bottoms of the screw grooves and thus the end face of the shoulder 57 does not exhibit a perfect flat surface. Accordingly the outer diameter of the fitting portion 56 is formed smaller than a diameter of bottoms of the screw grooves 53a so as to assure a sufficiently flat abutting surface on the shoulder portion 57.

The screw shaft 53 is formed of medium/high carbon steel including carbon of 0.40 - 0.80% by weight such as S53C and hardened by high frequency induction quenching so that the screw groove 53a and a region from the screw groove 53a to the fitting portion 56 through the shoulder portion 57 is formed with a hardened layer having the surface hardness of 54-64 HRC. An end 56a of the fitting portion 56 is remained as no-hardened condition having surface hardness of its original blank. The supporting bearing 50 is press-fitted onto the fitting portion 56 of the screw shaft 53 via a predetermined interference and then a spacer ring 58 having a rectangular cross-section and abutting against one end face 54b of the inner ring 54 is mounted on the fitting portion 56 with the other end face 54a of the inner ring 54 being abutted against the shoulder portion 57.

Finally a caulked portion 59 is formed under a condition of the spacer ring 58 being abutted against the shoulder portion 57 by deforming an end portion 56a of the fitting portion 56 radially outward. The caulked portion 59 enables the supporting bearing 50 to be secured without the axial play relative to the screw shaft 53 and thus to prevent the spacer ring 58 from being slipped off or damaged even if the shocking load is applied thereto and accordingly the reliability and durability of the supporting bearing 50 can be improved.

### Document of Prior Art

### Patent Document

Patent Document 1: Japanese Laid-open Patent Publication No. 211793/2007. Moreover, an electric power steering apparatus is known from EP 1 808 618 A1.

### Disclosure of the Invention

### Problems to be solved by the Invention

In the supporting structure of the ball screw shaft of the prior art, the ball screw shaft 53 is connected to an electric motor (not shown) via a coupling. Accordingly two flat portions 60 are formed on the end of the screw shaft 53 and a counter recess to be fitted onto the flat portions 60 is formed in the coupling. However it is very difficult to achieve the accuracy control for assuring the coaxiality between the screw shaft 53 and the coupling via the direct formation of flat portions 60 on the end of the screw shaft 53. In addition this structure requires not only to form the flat portions 60 on the screw shaft 53 but also to form recesses both in the end of the motor shaft and in the coupling. This increases the manufacturing cost of the ball screw driving apparatus due to increase of machining steps and controlling steps.

It is therefore an object of the present invention to provide a supporting structure of a ball screw shaft which can reduce its manufacturing cost and size as well as improve the durability and reliability.

### Means for solving the Problems

For achieving the object of the present invention, there is provided, according to the present invention of claim 1, a supporting structure of a screw shaft of a ball screw.

According to the supporting structure of a screw shaft of a ball screw of claim 1, since that fitting portions and shoulder portions are formed on both ends of the screw shaft and the supporting bearings are press-fitted onto the fitting portions via a predetermined interference, that the coupling has a substantially annular configuration and its inner circumference is formed with a cylindrical fitting surface to be press-fitted onto one fitting portion of the screw shaft on the electric motor side and with an engaging recess to be fitted onto the motor shaft, that the coupling is press-fitted onto the fitting portion of the screw shaft until one end face of the coupling is closely contacted with one end face of an inner ring of the supporting bearing, and that the inner ring of the supporting bearing is axially secured with being sandwiched between the shoulder portion of the screw shaft and the coupling, it is possible to provide a supporting structure of a screw shaft of a ball screw which can assure the slip-off preventing ability of the inner ring and transmit a desired torque without forming any flat portion for torque transmission on the screw shaft and also improve the durability and reliability at a low manufacturing cost.

It is preferable as defined in claim 2 that the supporting bearing of the electric motor side of the supporting bearings comprises an outer ring, an inner ring having a radial thickness larger than that of the outer ring and fitted therein via a plurality of balls, and a cage for rotationally holding the balls, and that the coupling is formed as having a large radial thickness so that the outer diameter of the coupling is substantially same as that of the inner ring. This makes it possible to increase the strength of the coupling and thus to strongly press-fit it onto the fitting portion of the screw shaft to have a desirable slip-off preventing ability of the inner ring.

It is also preferable as defined in claim 3 that the coupling is formed with a smaller diameter portion on an outer circumference of the engaging recess. This enables to reduce the weight of the ball screw and thus its rotary inertia.

As an alternative not forming part of the invention; the coupling and the inner ring could be integrally formed. This enables to reduce the weight and size of the ball screw and to assure sufficient fitting surface and thus to increase the slip-off preventing ability of the inner ring.

It is preferable as defined in claim 4 that the screw shaft is hardened by high frequency induction quenching so that both ends including the shoulder portions and the fitting portions are hardened as having a predetermined surface hardness. This enables to prevent fretting wear in the fitting portion and the shoulder portion and thus to improve the reliability and durability of the ball screw.

It is also preferable as defined in claim 5 that at least the fitting surface and the engaging recess of the coupling are hardened as having a surface hardness of 40-64 HRC. This makes it possible to improve the wear resistance and thus to assure the strength and durability of the ball screw for a long term.

As an alternative not forming part of the invention; the engaging recess could be formed by a plurality of teeth of projections and recesses. This would enable to surely transmit the rotational torque.

It is preferable as defined in claim 6 that at least one of the support bearings is formed by a four-point contact ball bearing. This makes it possible to surely support the axial loads in either direction and the moment load applied to the screw shaft and to reduce the weight and size of the ball screw.

### Effects of the Invention

According to the supporting structure of a screw shaft of a ball screw comprising a screw shaft of claim 1, it is possible to provide a supporting structure of a screw shaft of a ball screw which can assure the slip-off preventing ability of the inner ring and transmit a desired torque without forming any flat portion for torque transmission on the screw shaft and also improve the durability and reliability at a low manufacturing cost.

### Brief Description of the Drawings

[Fig. 1] A longitudinal section view of an electric linear actuator to which the supporting structure of the ball screw shaft of the present invention can be applied;
[Fig. 2(a)] A partially enlarged side elevation view showing an example of supporting structure of the ball screw shaft of Fig.1 not part of the present invention;
[Fig. 2(b)] A partially enlarged longitudinal section view showing an example of supporting structure of the ball screw shaft of Fig.1 not part of the present invention;
[Fig. 3] A longitudinal section view showing a modification of Fig. 2, according to the present invention;
[Fig. 4] A longitudinal section view showing an example not part of the present invention;
[Fig. 5(a)] A partially enlarged side elevation view showing the supporting structure of the ball screw shaft of the prior art; and
[Fig. 5(b)] A longitudinal section view showing the supporting structure of the ball screw shaft of the prior art.

### Best mode for carrying out the Invention

The best mode for carrying out the present invention is a supporting structure of a screw shaft of a ball screw in which the screw shaft is rotationally supported relative to a housing via supporting bearings and connected to a motor shaft of an electric motor via a coupling **characterized in that** fitting portions and shoulder portions are formed on both ends of the screw shaft and the supporting bearings are press-fitted onto the fitting portions via a predetermined interference, that the supporting bearing of the electric motor side of the supporting bearings comprises an outer ring, an inner ring having a radial thickness larger than that of the outer ring and fitted therein via a plurality of balls, and a cage for rotationally holding the balls, that the coupling is formed as having a large radial thickness so that the outer diameter of the coupling is substantially same as that of the inner ring, that the coupling has a substantially annular configuration and its inner circumference is formed with a cylindrical fitting surface to be press-fitted onto one fitting portion of an electric motor side and with an engaging recess to be fitted onto the motor shaft, that the coupling is press-fitted onto the fitting portion of the screw shaft until one end face of the coupling is closely contacted with one end face of an inner ring of the supporting bearing, that the inner ring of the supporting bearing is axially secured with being sandwiched between the shoulder portion of the screw shaft and the coupling, and that a rectangular chamfered portion is formed on the opening of the 4-face formed engaging recess of the coupling.

### Embodiment

A preferred embodiment of the present invention will be hereinafter described with reference to the drawings.

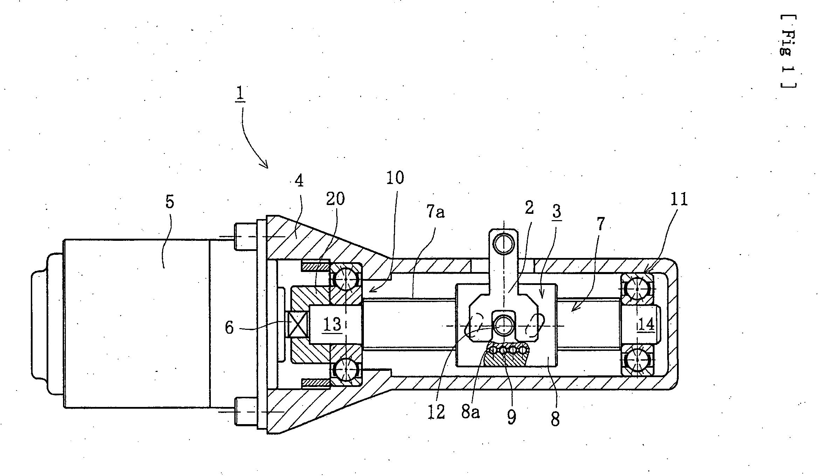

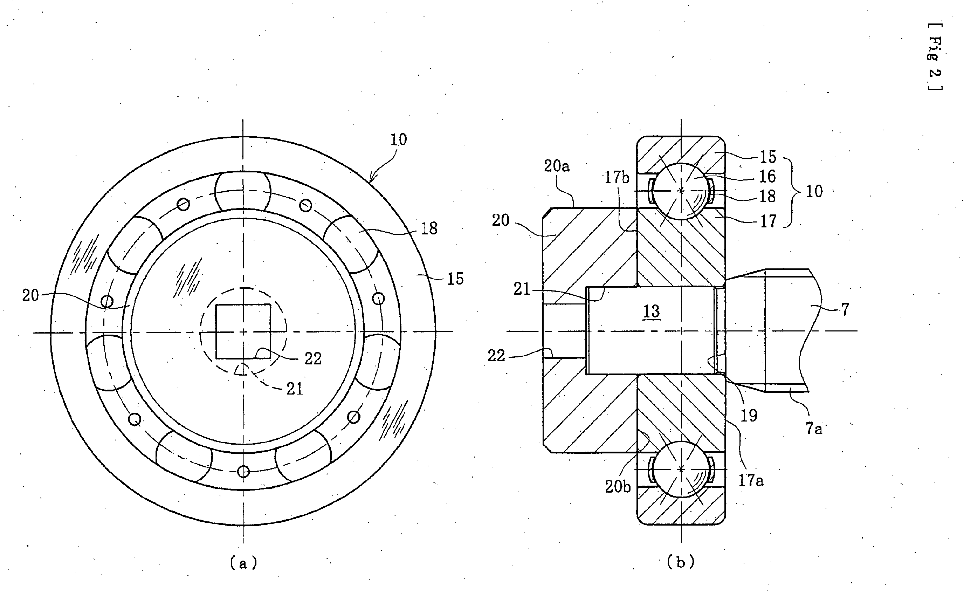

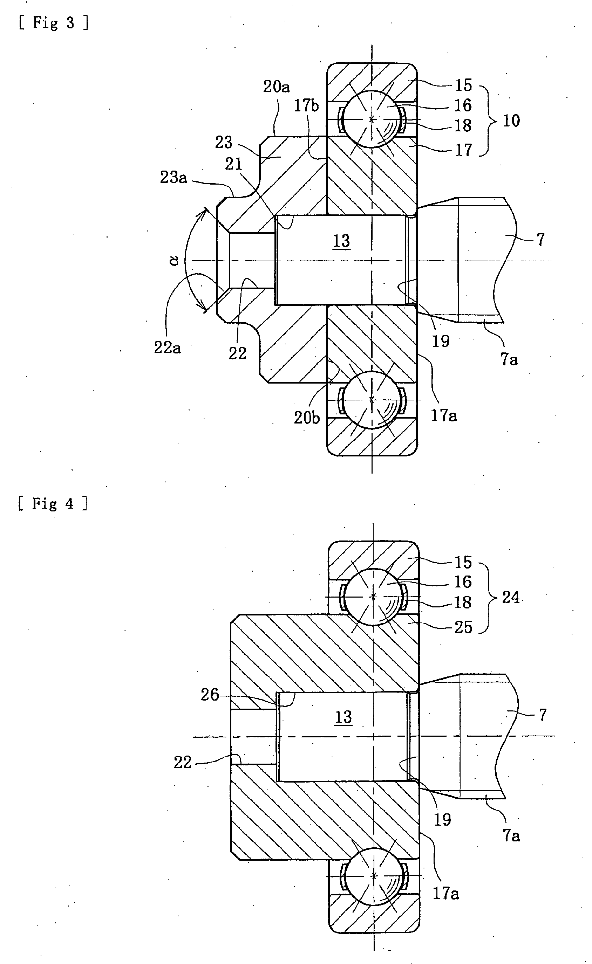

Fig. 1 is a longitudinal section view of an electric linear actuator to which a supporting structure of the ball screw shaft is applied, Fig. 2(a) is a partially enlarged side elevation view showing an example of supporting structure of the ball screw shaft not according to the present invention, Fig. 2(b) is a longitudinal section view showing an example of supporting structure of the ball screw shaft not according to the present invention, Fig. 3 is a longitudinal section view showing a modification of Fig. 2 and part of the invention, and Fig. 4 is a longitudinal section view showing another modification of Fig. 2 not according to the present invention. In following descriptions, it is defined that a motor side of the ball screw is referred to as an outer side (lefthand side in drawings) and the opposite side is referred to as an inner side (right-hand side in drawings).

The electric linear actuator 1 comprises a link 2, a ball screw 3 for driving a driven member (not shown) via the link 2, and an electric motor 5 mounted on a housing 4 for driving the ball screw 3.

The ball screw 3 comprises a screw shaft 7 connected to a motor shaft 6 of the electric motor 5 via a coupling 20 and rotationally driven by the electric motor 5, and a nut 8 inserted on the screw shaft 7 via a plurality of balls 9. A helical screw groove 7a is formed on the outer circumference of the screw shaft 7 and corresponding opposite helical screw groove 8a is formed on the inner circumference of the nut 8. The cross sectional configuration of each screw groove 7a or 8a may be a circular arc configuration or a Gothic arc configuration. In this example the Gothic arc configuration is adopted because it can set a large contacting angle against the balls 9 as well as a small axial gap. This enables to increase the rigidity against the axial load and to suppress generation of vibration.

The screw shaft 7 is supported on the housing 4 via supporting bearings 10, 11 comprising a pair of rolling bearings rotationally movable but axially immovable relative to the housing 4. On the other hand the nut 8 has on its outer circumference a pair of supporting shafts 12 projected therefrom perpendicularly to the axis of the screw shaft 7 for pivotally supporting one end of the link 2. Accordingly the nut 8 is supported on the screw shaft 7 axially movably but rotationally immovably.

When the screw shaft 7 is rotated by the electric motor 5, the nut 8 is driven by the screw shaft 7 along its axis (left and right directions in Fig. 1). The rotational motion of the motor shaft 6 is converted to the axial motion of the nut 8 via the ball screw 3 and then the link 2 connected to the nut 8 via the supporting shafts 12 is swingably moved.

At least one of the supporting bearings 10, 11 comprises a four-point contact ball bearing and press-fitted onto a fitting portions 13, 14 formed on the end of the screw shaft 7. Although these supporting bearings 10, 11 are single row rolling bearing, they can bear both the axial load and the moment load applied to the screw shaft 7 and accordingly it is possible to reduce the weight and size of the ball screw 3.

As shown in an enlarged view of Fig. 2, the supporting bearing 10 of the motor side comprises a four-point contact ball bearing including an outer ring 15 adapted to be fitted into the housing 4, an inner ring 17 arranged within the outer ring 15 via a plurality of balls 16 and having a radial thickness larger than that of the outer ring 15, and a cage 18 rollably holding the balls 16. The outer ring 15, inner ring 17 and balls 16 are formed of high carbon chrome steel such as SUJ2 and hardened to their core by dipping quenching as having surface hardness of 58-64 HRC. It will be appreciated that the supporting bearings 10, 11 are not limited to the four-point contact ball bearings and other types of bearings such as deep groove ball bearings, angular contact ball bearings, double row combination of angular contact ball bearings or double row angular contact ball bearings may be used.

The fitting portion 13 formed on the end of the screw shaft 7 is formed with a shoulder portion 19 against which the end face of the inner ring 17 is abutted. The circumference of the end face of the shoulder 19 of the screw shaft 7 is separated to tops and bottoms of the screw grooves 7a and thus the end face of the shoulder 19 does not exhibit a perfect flat surface and thus it is afraid that the supporting bearing 10 would be secured under an inclined condition. Accordingly in the present invention the outer diameter of the fitting portion 13 is formed smaller than a diameter of bottoms of the screw grooves 7a so as to assure a sufficiently flat abutting surface on the shoulder portion 19.

The screw shaft 7 is formed of medium carbon steel including carbon of 0.40-0.80% by weight such as S53C and hardened by high frequency induction quenching so that the screw groove 7a and a region from the screw groove 7a to the fitting portion 13 through the shoulder portion 19 has a hardened layer having hardness of 54-64 HRC. Thus fretting wear of the fitting portion 13 and the shoulder portion 19 can be prevented. Then the supporting bearing 10 is press-fitted onto the fitting portion 13 of the screw shaft 7 and finally a coupling 20 is press-fitted onto the fitting portion 13 via a predetermined interference with the inner side end face 17a of the inner ring 17 being abutted against the shoulder portion 19.

The coupling 20 is formed as having an annular configuration and also formed on its inner circumference with a cylindrical fitting surface 21 to be press-fitted onto the fitting portion 13 of the screw shaft 7 and with a 4-face engaging recess 22 to be fitted onto the motor shaft 6. The coupling 20 has a large radial thickness and the outer circumference 20a of the coupling 20 has an outer diameter substantially same as that of the inner ring 17. The coupling 20 is strongly press-fitted onto the fitting portion 13 of the screw shaft 7 until the inner side end face 20b of the coupling 20 is closely contacted with the outer side end face 17b of the inner ring 17. Thus the inner ring 17 can be rigidly sandwiched between the shoulder 19 of the screw shaft 7 and the coupling 20 without any axial play therebetween. Since the coupling 20 has a large thickness and is strongly press-fitted onto the fitting portion 13 of the screw shaft 7 and connected to the motor shaft 6 via the engaging recess 22, it is possible to assure the slip-off preventing ability of the inner ring 17, to transmit a desirable torque without forming on the screw shaft 7 any portion having flat engaging surfaces for torque transmission, and thus to provide a supporting structure of a ball screw shaft which can be manufactured at a low cost and improved in its durability and reliability.

The coupling 20 is formed of carbon steel including carbon of 0.40-0.50%by weight such as S45C or high carbon chrome steel such as SUJ2 and at least the fitting surface 21 and the engaging recess 22 are hardened as having a surface hardness of 40-64 HRC by high frequency induction quenching or dipping quenching. This enables to improve the wear resistance of the coupling 20 and to assure its strength and durability for a long term. Although it is illustrated and described that the coupling 20 is formed with the 4-face engaging recess 22 to be fitted onto the motor shaft 6, it is possible to use a 2-face or 6-face engaging recess or teeth of projections and recesses.

Fig. 3 shows one modification of the supporting structure. This is fundamentally different from the previous supporting structure only in the structure of coupling. Accordingly same or similar structural elements as those in the previous supporting structure are designated by same reference numerals and not repeatedly described again herein.

Similarly to the previous supporting structure the supporting bearing 10 is press-fitted onto the fitting portion 13 of the screw shaft 7 and a coupling 23 is press-fitted onto the fitting portion 13 via a predetermined interference with the inner side end face 17a of the inner ring 17 being abutted against the shoulder portion 19.

The coupling 23 is formed as having an annular configuration and is formed on its inner circumference with the cylindrical fitting surface 21 to be press-fitted onto the fitting portion 13 of the screw shaft 7 and with the 4-face engaging recess 22 to be fitted onto the motor shaft 6. The coupling 23 has a large radial thickness and the outer circumference 20a of the coupling 23 has an outer diameter substantially same as that of the inner ring 17. In addition the coupling 23 has a reduced outer circumference 23a of a smaller diameter than the outer circumference 20a at a position substantially radially outward of the engaging recess 22. Furthermore a rectangular chamfered portion 22a having a divergent angle α(α=80-100°)is formed on the opening of the engaging recess 22 for achieving easy connection to the motor shaft 6.

The coupling 23 is strongly press-fitted onto the fitting portion 13 of the screw shaft 7 until the inner side end face 20b of the coupling 23 is closely contacted with the outer side end face 17b of the inner ring 17. Thus similarly to the previous embodiment the inner ring 17 can be rigidly sandwiched between the shoulder 19 of the screw shaft 7 and the coupling 23 without any axial play therebetween and assure the slip-off preventing ability of the inner ring 17 as well as transmit a desirable torque without forming on the screw shaft 7 any portion having flat engaging surfaces for torque transmission. This enables to improve the durability and reliability at a low cost. In addition, since the coupling 23 has the reduced diameter portion 23a, it is possible to reduce the weight of the ball screw and its rotary inertia.

The coupling 23 is formed of cemented steel such as SCr420 and hardened by carburizing quenching as having the surface hardness of 40 - 60 HRC. This enables to improve the wear resistance and to assure the strength and durability of the ball screw for a long term.

Fig. 4 shows an example of the supporting structure not according to the invention. This is fundamentally different from the previous embodiment and modification in that the inner ring is formed integrally with the coupling. Accordingly same or similar structural elements as those in the previous embodiment are designated by same reference numerals and not repeatedly described again herein.

This supporting bearing 24 comprises the outer ring 15 to be fitted into the housing 4, an inner ring 25 arranged within the outer ring 15 via a plurality of balls 16 and having a radial thickness larger than that of the outer ring 15, and the cage 18 rollably holding the balls 16. The inner ring 25 is press-fitted onto the fitting portion 13 via a predetermined interference with the inner side end face 17a of the inner ring 25 being abutted against the shoulder portion 19.

The inner ring 25 is formed as having an annular configuration and is formed on its inner circumference with a cylindrical fitting surface 26 to be press-fitted onto the fitting portion 13 of the screw shaft 7 and with the 4-face engaging recess 22 to be fitted onto the motor shaft 6. The inner ring 25 is formed of high carbon chrome steel such as SUJ2 and hardened to their core by dipping quenching as having surface hardness of 58-64 HRC.

According to this example not according to the invention since the coupling is formed integrally with the inner ring 25, it is possible to have a sufficient fitting portion 26 as compared with the previous embodiment and modification and thus to assure the slip-off preventing ability of the inner ring 25. It is also possible to transmit a desirable torque without forming on the screw shaft 7 any portion having flat engaging surfaces for torque transmission and thus to provide a supporting structure of a ball screw shaft which can be manufactured at a low cost and improved in its durability and reliability.

The present invention has been described with reference to the preferred embodiment and modifications. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof. Applicability in Industries

The supporting structure of a screw shaft of the present invention can be applied to a supporting structure of a screw shaft in which a ball screw shaft is rotationally supported by rolling bearings and adapted to be connected torque transmittably to a shaft of an electric motor.

### Explanation of Reference numerals and Character

- 1: electrically driven linear actuator
- 2: link
- 3: ball screw
- 4: housing
- 5: electric motor
- 6: motor shaft
- 7: screw shaft
- 7a, 8a: screw groove
- 8: nut
- 9, 16: ball
- 10, 11, 24: supporting bearing
- 12: supporting shaft
- 13, 14: fitting portion
- 15: outer ring
- 17, 25: inner ring
- 17a, 17b: end face of inner ring
- 18: cage
- 19: shoulder portion
- 20, 23: coupling
- 20a: outer circumference of coupling
- 20b: end face of coupling
- 21, 26: fitting surface
- 22: engaging recess
- 22a: rectangular chamfered portion
- 23a: reduced outer circumference
- 50: supporting bearing
- 51: outer ring
- 52: ball
- 53: screw shaft
- 53a: screw groove
- 54: inner ring
- 54a, 54b: end face of inner ring
- 55: cage
- 56: fitting portion
- 56a: end face of fitting portion
- 57: shoulder portion
- 58: spacer ring
- 59: caulked portion
- 60: flat portion
- α: divergent angle

## Claims

1. A supporting structure of a screw shaft (7) of a ball screw (3) comprising a screw shaft (7) in which the screw shaft (7) is rotationally supported relative to a housing (4) via supporting bearings (10, 11) and connected to a motor shaft (6) of an electric motor (5) via a coupling (23) ;
wherein fitting portions (13, 14) and shoulder portions (19) are formed on both ends of the screw shaft (7) and the supporting bearings (10, 11) are press-fitted onto the fitting portions (13, 14) via a predetermined interference;
wherein the coupling (23) has a substantially annular configuration and its inner circumference is formed with a cylindrical fitting surface (21) to be press-fitted onto one fitting portion (13) of the screw shaft (7) on the electric motor side and with an engaging recess (22) to be fitted onto the motor shaft (6);
wherein the coupling (23) is press-fitted onto the fitting portion (13) of the screw shaft (7) until one end face (20b) of the coupling (23) is closely contacted with one end face (17b) of an inner ring (17) of the supporting bearing (10); and
wherein the inner ring (17) of the supporting bearing (10) is axially secured with being sandwiched between the shoulder portion (19) of the screw shaft (7) and the coupling (23); **characterized in that**
the engaging recess (22) is a four-face engaging recess; and
a rectangular chamfered portion (22a) is formed on the opening of the 4-face engaging recess (22) of the coupling (23).

2. A supporting structure of a screw shaft of a ball screw of claim 1 wherein the supporting bearing (10) of the electric motor side of the supporting bearings (10, 11) comprises an outer ring (15), an inner ring (17) having a radial thickness larger than that of the outer ring (15) and fitted therein via a plurality of balls (16), and a cage (18) for rotationally holding the balls (16), and wherein the coupling (20 or 23) is formed as having a large radial thickness so that the outer diameter of the coupling (20 or 23) is substantially same as that of the inner ring (17).

3. A supporting structure of a screw shaft of a ball screw of claim 1 or 2 wherein the coupling (23) is formed with a smaller diameter portion (23a) on an outer circumference of the engaging recess (22).

4. A supporting structure of a screw shaft of a ball screw of any one of claims 1-3 wherein the screw shaft (7) is hardened by high frequency induction quenching so that both ends including the shoulder portions (19, 19) and the fitting portions (13, 14) are hardened as having a predetermined surface hardness.

5. A supporting structure of a screw shaft of a ball screw of any one of claims 1-4 wherein at least the fitting surface (21) and the engaging recess (22) of the coupling (20 or 23) are hardened as having a surface hardness of 40 - 64 HRC.

6. A supporting structure of a screw shaft of a ball screw of any one of claims 1-5 wherein at least one of the support bearings (10 or 24; 11) is formed by a four-point contact ball bearing.

## Patentansprüche

1. Stützaufbau einer Gewindespindel (7) eines Kugelgewindetriebs (3), der eine Gewindespindel (7) umfasst, wobei die Gewindespindel (7) durch Stützlager (10, 11) in Bezug auf ein Gehäuse (4) drehbar gehalten wird und über eine Kupplung (23) mit einer Motorwelle (6) eines Elektromotors (5) verbunden ist;
wobei an beiden Enden der Gewindespindel (7) Passabschnitte (13, 14) und Schulterabschnitte (19) gebildet sind und die Stützlager (10, 11) über ein vorherbestimmtes Übermaß auf die Passabschnitte (13, 14) pressgepasst sind;
wobei die Kupplung (23) eine im Wesentlichen ringförmige Gestaltung aufweist und ihr Innenumfang mit einer zylinderförmigen Passoberfläche (21) zur Presspassung auf einen auf Seiten des Elektromotors liegenden Passabschnitt (13) der Gewindespindel (7) und mit einer Eingreifaussparung (22) zur Passung auf die Motorwelle (6) ausgeführt ist;
wobei die Kupplung (23) auf den Passabschnitt (13) der Gewindespindel (7) pressgepasst wird, bis eine Endfläche (20b) der Kupplung (23) in einem engen Kontakt mit einer Endfläche (17b) eines Innenrings (17) des Stützlagers (10) steht; und
wobei der Innenring (17) des Stützlagers (10) axial befestigt wird, indem er zwischen dem Schulterabschnitt (19) der Gewindespindel (7) und der Kupplung (23) eingeklemmt wird, **dadurch gekennzeichnet, dass**
die Eingreifaussparung (22) eine vierflächige Eingreifaussparung ist; und
an der Öffnung der vierflächigen Eingreifaussparung (22) der Kupplung (23) ein rechteckiger abgeschrägter Abschnitt (22a) gebildet ist.

2. Stützaufbau einer Gewindespindel eines Kugelgewindetriebs nach Anspruch 1, wobei das auf Seiten des Elektromotors liegende Stützlager (10) der Stützlager (10, 11) einen Außenring (15), einen Innenring (17), der eine radiale Dicke aufweist, die größer als jene des Außenrings (15) ist, und über mehrere Kugeln (16) in diesen gesetzt ist, und einen Käfig (18), um die Kugeln (16) drehbar zu halten, umfasst, und wobei die Kupplung (20 oder 23) derart gebildet ist, dass sie eine große radiale Dicke aufweist, so dass der Außendurchmesser der Kupplung (20 oder 23) im Wesentlichen der gleiche wie jener des Innenrings (17) ist.

3. Stützaufbau einer Gewindespindel eines Kugelgewindetriebs nach Anspruch 1 oder 2, wobei die Kupplung (23) an einem Außenumfang der Eingreifaussparung (22) mit einem Abschnitt (23a), der einen kleineren Durchmesser aufweist, ausgeführt ist.

4. Stützaufbau einer Gewindespindel eines Kugelgewindetriebs nach einem der Ansprüche 1 bis 3, wobei die Gewindespindel (7) durch Hochfrequenzinduktionsabschrecken derart gehärtet ist, dass beide Enden einschließlich der Schulterabschnitte (19, 19) und der Passabschnitte (13, 14) so gehärtet sind, dass sie eine vorherbestimmte Oberflächenhärte aufweisen.

5. Stützaufbau einer Gewindespindel eines Kugelgewindetriebs nach einem der Ansprüche 1 bis 4, wobei wenigstens die Passoberfläche (21) und die Eingreifaussparung (22) der Kupplung (20 oder 23) so gehärtet sind, dass sie eine Oberflächenhärte von 40 bis 64 HRC aufweisen.

6. Stützaufbau einer Gewindespindel eines Kugelgewindetriebs nach einem der Ansprüche 1 bis 5, wobei wenigstens eines der Stützlager (10 oder 24; 11) durch ein Vierpunkt-Kugellager gebildet ist.

## Revendications

1. Structure de soutien d'une tige de vis (7) d'une vis à bille (3) comprenant une tige de vis (7), dans laquelle la tige de vis (7) est soutenue rotativement par rapport à un logement (4) via des paliers de soutien (10, 11) et raccordée à un arbre de moteur (6) d'un moteur électrique (5) via un accouplement (23) ;
dans laquelle des portions d'ajustement (13, 14) et des portions d'épaulement (19) sont formées sur les deux extrémités de la tige de vis (7) et les paliers de soutien (10, 11) sont ajustés par pressage sur les portions d'ajustement (13, 14) via une interférence prédéterminée ;
dans lequel l'accouplement (23) a une configuration substantiellement annulaire et sa circonférence intérieure est formée avec une surface d'ajustement cylindrique (21) à ajuster par pressage sur une portion d'ajustement (13) de la tige de vis (7) du côté du moteur électrique et avec un évidement de mise en prise (22) à ajuster sur l'arbre de moteur (6) ;
dans lequel l'accouplement (23) est ajusté par pressage sur la portion d'ajustement (13) de la tige de vis (7) jusqu'à ce qu'une face d'extrémité (20b) de l'accouplement (23) contacte étroitement une face d'extrémité (17b) d'une bague intérieure (17) du palier de soutien (10) ; et
dans lequel la bague intérieure (17) du palier de soutien (10) est fixée axialement en étant intercalée entre la portion d'épaulement (19) de la tige de vis (7) et l'accouplement (23) ; **caractérisée en ce que**
l'évidement de mise en prise (22) est un évidement de mise en prise à quatre faces ; et
une portion chanfreinée rectangulaire (22a) est formée sur l'ouverture d'un évidement de mise en prise à 4 faces (22) de l'accouplement (23).

2. Structure de soutien d'une tige de vis d'une vis à bille selon la revendication 1, dans laquelle le palier de soutien (10) du côté du moteur électrique des paliers de soutien (10, 11) comprend une bague extérieure (15), une bague intérieure (17) ayant une épaisseur radiale plus grande que celle de la bague extérieure (15)et ajustée dans celle-ci via une pluralité de billes (16), et une cage (18) pour contenir rotativement les billes (16), et dans laquelle l'accouplement (20 ou 23) est formée comme ayant une épaisseur radiale plus grande de sorte que le diamètre extérieur de l'accouplement (20 ou 23) soit substantiellement identique à celui de la bague intérieure (17).

3. Structure de soutien d'une tige de vis d'une vis à bille selon les revendications 1 ou 2, dans lequel l'accouplement (23) est formé avec une portion à plus petit diamètre (23a) sur une circonférence extérieure de l'évidement de mise en prise (22).

4. Structure de soutien d'une tige de vis d'une vis à bille selon une quelconque des revendications 1 à 3, dans laquelle la tige de vis (7) est durcie par induction à haute fréquence de sorte que les deux extrémités incluant les portions d'épaulement (19, 19) et les portions d'ajustement (13, 14) soient durcies de manière à avoir une dureté de surface prédéterminée.

5. Structure de soutien d'une tige de vis d'une vis à bille selon une quelconque des revendications 1 à 4, dans laquelle au moins la surface d'ajustement (21) et l'évidement de mise en prise (22) de l'accouplement (20 ou 23) sont durcies de manière à avoir une dureté de surface de 40-64 HRC.

6. Structure de soutien d'une tige de vis d'une vis à bille selon une quelconque des revendications 1 à 5, dans laquelle au moins un des paliers de soutien (10 ou 24 ; 11) est formé par un palier à bille à contact à quatre points.
